# EUROPEAN PATENT SPECIFICATION

(11) **EP 1 647 066 B1**
(45) Date of publication and mention of the grant of the patent: **29.12.2010**
(21) Application number: 04761989.5
(22) Date of filing: 20.07.2004
(51) Int. Cl.: H01M 4/04, C01B 31/04

(54) **NEGATIVE ELECTRODES FOR RECHARGEABLE BATTERIES**
NEGATIVE ELEKTRODEN FÜR WIEDERAUFLADBARE BATTERIEN
ELECTRODES NEGATIVES POUR BATTERIES RECHARGEABLES

(30) Priority: 22.07.2003 CN 03132939; 16.08.2003 CN 03140199
(43) Date of publication of application: 19.04.2006
(73) Proprietor: Byd Company Limited, Shenzhen, Guangdong 518119 (CN)
(72) Inventor: ZOU, Caisong, BYD Company Ltd., Shenzen, Guangdong 518119 (CN); WANG, Chuanfu, BYD Company Ltd., Shenzen, Guangdong 518119 (CN); DONG, Junqing, BYD Company Ltd., Shenzen, Guangdong 518119 (CN)
(74) Representative: Heinze, Ekkehard
(86) International application number: PCT/CN2004/000835
(87) International publication number: WO 2005/008811

(56) References cited:
- EP-A1- 0 346 088
- EP-A1- 0 782 207
- EP-A2- 0 652 602
- EP-A2- 0 717 456
- EP-A2- 1 014 462
- CN-A- 1 151 617
- CN-A- 1 190 804
- CN-A- 1 227 003
- US-A- 5 712 059
- US-A1- 2002 061 445

## Description

### Field of Invention

This invention relates to a type of rechargeable battery and its negative electrode. In particular, it relates to a mixture of ingredients that constitutes the active material for the negative electrode of a battery (e.g. lithium ion battery).

### Background

With the rapid development of the electronics, communications, and informational industries, market demands for power sources of electronics products have increased. Lithium ion rechargeable batteries with its many excellent properties are being broadly used to fill this demand. With their widespread use, consumers want higher battery performance, especially excellent overall battery properties. That is, the market is demanding that the lithium ion rechargeable battery have high discharge capacity, long cycle life, and excellent high current and safety characteristics.

For the lithium ion rechargeable battery, the active material for the negative electrode is critical in the battery's ability to increase the discharge capacity and cycle life. The stability of the underlying structure of the active material for the negative electrode is also important in assuring that the battery possesses excellent high current and safety characteristics.

At present, graphite materials are most commonly used as the active materials for the negative electrode of the lithium ion rechargeable battery. However, most graphite needs to be appropriately treated and modified before its can be widely used. Among the most common treatment methods, coating produces the best results. Many researchers have attempted to coat the surface of the graphite with a layer of polymer material and the carbonizing it at a predetermined temperature to obtain a "core-shell" structure for the graphite composite. This retains the reversible specific capacity and better charging and discharging platform characteristics of the graphite, but also incorporates the good compatibility of the polymer thermally decomposed carbon with the organic electrolyte solution. From that, they achieve the excellent qualities of long cycle life, good high current characteristics, safety and stability. However, in practical applications, the improvement in the overall properties is not ideal. For example, Batteries, 2002.32(1): 13-15, describes the use of epoxy resin and thermally hardened and decomposed carbon to modify crystalline flake natural graphite in multiple modification steps. This changed the form of the graphite and reduces the directional properties of the crystalline flake graphite. It also improves the surface morphology of the graphite, and improves the compatibility of the graphite and the electrolyte solution such that there is improvement in its cycle characteristics. However, the modified graphite obtained by this method has lower initial charging and discharging efficiency (approximately 80%) and cannot satisfy the market demand for this desired battery characteristic. In Japanese Patent JP10-012241, a CVD (Chemical Vapor Deposition) process is used to treat graphite for use as negative electrodes in batteries. However, its cycle characteristics are poor and the equipment for the treatment is complex and expensive, resulting in high production cost and difficulty in implementing this technology for industrial production.

Therefore, many researchers have started to research using multiple modification steps to modify different materials for the active material of the negative electrode. For example, CN1186350 involves combining carbon material A and material B, a metal with high lithium content or oxidized tin material, to form the active material for the negative electrode of the battery. A battery made with this material as its negative electrode has high reversible specific capacity. However, its cycle characteristics are still poor; its capacity retention rate is less than 90% after 20 charge and discharge cycles.

At present, several common problems are encountered when trying to improve the active material for the negative electrode of the lithium ion rechargeable battery. In attempting to improve the cycle stability characteristics, the initial charging and discharging efficiency is sacrificed. The ability to increase the cycle life span is limited, resulting in a battery that does not meet the demands of practical applications. Alternatively, the technology and equipment for the improvements are so complex that they result in a high cost of production and it is difficult to implement the improvements for commercial production. In summary, poor overall performance is the problem encountered by the existing technology for the lithium ion rechargeable battery.

US 2002/061445 A1 discloses a negative electrode for a rechargeable battery comprising graphite particles covered by a carbon layer. The plane interval d₀₀₂ of the graphite particles is less than 0.337nm, the particle size ranges from 10 to 30µm and the specific surface area is comprised between 3.5 and 10m²/g. The negative electrode of claims land 5 lack consequently novelty with regard to D1 when the particle size of the graphite A and of the graphite B is e.g. 30µm and the plane interval d₀₀₂ of the graphite A and of the graphite B is e.g. 0.336nm.

Furthermore, EP-A2-0 652 602 and EP-A1-0 782 207 likewise disclose a negative electrode for a rechargeable battery comprising graphite particles, wherein the plane interval d₀₀₀₂ of the graphite particles is less than 0.337nm.

### Summary of Invention

An object of this invention is to provide a type negative electrode and a type of rechargeable battery that have excellent overall properties, such as high discharge capacity, long cycle life, and excellent high current and safety characteristics.

Briefly, this invention relates to a type negative electrode for a rechargeable battery according to claim 1 and fabricated according to the method of claim 10. Said negative electrode is preferably fabricated by a method comprising the steps of: (a) mixing said graphite A and graphite B; (b) adding binder, dispersant, and solvent to said mixture of said graphite A and graphite B; (c) stirring to mix at 300 rpm to 600 rpm for 0.2hours to 10 hours; (d) coating, (e) drying with heat, and (f) compressing. A rechargeable battery (such as a lithium ion battery) made from said negative electrode has a high discharge capacity, long cycle life, and excellent high current and safety characteristics.

Some of the advantages of said rechargeable battery (such as a lithium ion battery) made from said negative electrode is that it has excellent overall qualities with high discharge capacity, long cycle life, excellent high current and safety characteristics. Another advantage is that the cost of production for this negative electrode is low; its fabrication technology is simple and easy to implement for commercial production.

### Detailed Description of Preferred Embodiments

This invention relates to the negative electrode of a rechargeable battery. The active material of said negative electrode is a mixture of graphite A and graphite B. In embodiments of this invention, the weight ratio of graphite A to graphite B is between 25:75 to 80:20. Graphite A is a type of improved graphite with its granules having an average granule diameter of between 10µm and 40µm, and a crystallite interlayer spacing, d₀₀₂, between 0.335nm and 0.342nm. The graphite granules of Graphite B are a type of man-made, natural, or otherwise modified graphite granules with average granule diameter between 5µm and 30µm and crystallite interlayer spacing, d₀₀₂, between 0.336nm and 0.360nm. The granule diameter is the D₅₀ measured using a particle size analyzer. The crystallite interlayer spacing, d₀₀₂, is measured using an X-Ray diffractometer.

In the embodiments of this invention, the graphite B in the active material of said negative electrode has more than 30% of its granules with granule diameter smaller than the average granule diameter of the granules of graphite A. Also, the crystallite interlayer spacing, d₀₀₂, in the graphite granules of graphite A is smaller than the crystallite interlayer spacing, d₀₀₂, in the graphite granules of graphite B.

An embodiment of this invention has graphite A being a plurality of improved graphite granules with a "core-shell" structure. High temperature carbonization produces an amorphous carbon layer coating on the surface of an unimproved graphite granule. The unimproved graphite granule can be a natural, man-made or otherwise modified graphite granule whose electrochemical properties needed to be improved. This graphite A has graphite granules having a specific surface area between 0.96 m²/g and 5.73m²/g, measured by using the single-point BET method.

A preferred specification for this embodiment is for the specific surface area of the graphite granules of graphite A to be between 1.0m²/g and 3.2m²/g, the average granule diameter to be between 12µm and 30µm, and the crystallite interlayer spacing, d₀₀₂, to be between 0.336nm and 0.339nm.

The negative electrode in this embodiment electrode is fabricated by adding binder, dispersant, and solvent to the mixture of graphite A and graphite B, stirring at 300rpm to 6000rpm for 0.2 hours to 10 hours to mix, coating to smear said graphite granules onto a foil, drying with heat, and compressing the foil to form the negative electrode.

In the embodiments of this invention, the average granule diameter of the graphite granules of graphite A is between 10µm to 40µm and the average granule diameter of the graphite granules of graphite B is between 5µm and 30µm. In practice, the granule diameter of some of the granules of graphite B is made smaller than the average granule diameter of the graphite granules of graphite A. By doing this, the distribution of the granule diameter of the graphite granules of graphite A and graphite B have complementary functions. The smaller granule diameter of the granules of graphite B, when mixed with the granules of graphite A, can fully fill the gaps between the granules of graphite A. To a certain degree, this phenomenon can improve the tapping density and compressing density of the graphite mixture and improve the alignment of the microscopic graphite granules such that the destruction of the graphite structure does not easily occur by the appearance of the peeling of the layers. This not only assures a higher reversible specific capacity for the battery, and also increases the battery's safety characteristics. In embodiments of this invention with practical applications, a preferred specification is to have over 30% of the granules in graphite B have granule diameters smaller than the average granule diameter of the graphite granules of graphite A.

In the embodiments of this invention, the crystallite interlayer spacing, d₀₀₂, for the graphite granules of graphite A is between 0.335nm and 342nm. The crystallite interlayer spacing, d₀₀₂, for the graphite granules of graphite B is between 0.336nm and 0.360nm such that the crystallite interlayer spacing, d₀₀₂, of the graphite granules of graphite A is smaller than the crystallite interlayer spacing, d₀₀₂, of the graphite granules of graphite B. That is, the degree of graphitization of the graphite granules of graphite A is higher while the degree of graphitzation of the graphite granules of graphite B is lower. The higher degree of graphitzation of the graphite granules of graphite A brings a high capacity battery. The lower degree of graphitization of the graphite granules of graphite B brings the associated long cycle life resulting in batteries with excellent overall characteristics. In embodiments with practical applications, the crystallite interlayer spacing, d₀₀₂, in the graphite granules of graphite A is smaller than in the graphite granules of graphite B.

In other embodiments of this invention, the thickness of the accumulation of the crystallite layers, Lc, and the size of the surfaces of the crystallite layers, La, of the graphite granules of graphite A are larger than that of the graphite granules of graphite B. This gives the microscopic foundation for the higher capacity of graphite A, since larger Lc and La results in more Li+ being easily absorbed and hidden, and better cycle stability of graphite B, since small Lc and La results in the crystallite structure being difficult to break. Due to the different but complementary properties of the microscopic structure of graphite A and graphite B, such as granule diameter distribution and the degree of graphitization, a negative electrode fabricated from this mixture takes the advantages and correct the shortcomings of both types of graphite. It fully utilizes the strengths of the two materials and effectively improves battery properties such as reversible capacity and cycle life. In the preferred embodiments with practical applications, the best results are obtained when the weight ratio of graphite A and graphite B in the mixture is between 25:75 and 80:20.

In an embodiment of this invention, a negative electrode of a lithium ion rechargeable battery is fabricated using a mixture of graphite A and graphite B, with the weight ratio of graphite A and graphite B is between 25:75 and 80:20. Binder, dispersant, and solvent are also added to said mixture of graphite A and graphite B, and then this mixture is stirred to mix at 300rpm to 6000rpm for between 0.2 hours to 10 hours, coated, heated to dry, and compressed to form the negative electrode

Said binder can be one of the following: fluorine containing resin such as teflon (PTFE), polyvinylidene fluoride (PVDF), and polyethylene (PE) polyvinyl alcohol (PVA). The dispersant can be cellulose. Said solvent can be N-methyl pyrrolidone, dimethyl formamide, ethanol, or de-ionized water. The current collector for use in the negative electrode can be copper foil, stainless steel foil, or nickel foil. The form can be mesh-type and foil-type.

To fabricate a lithium ion rechargeable battery using an embodiment of said negative electrode, a positive electrode is made from the active ingredient for the positive electrode, the corresponding electrolyte, and binder coated on the current collector. The active material of the positive ingredient can be a type of compound where lithium can be embedded and can be reversely diffused in. For example, transition metal oxide materials containing lithium can be used. Chemicals obtained from the alloys of lithium and multiple types of transition metal can also be used. Particular examples are: LiM¹ₓM²₁₋ₓO₂ and LiM¹_{y}M²_{2-y}O₂. where M¹ and M² represents at least a type of transition metal element, including Co, Ni, Mn, Cr, V, Fe, Al, Zn, Ti, Sn, and In, with 0≤x,y≤1. Other than those listed above, the oxides of vanadium, and sulfur containing compounds, such as V₂O₅ and TiS, can also be used. Lithium compounds with stable and excellent properties, such as LiCoO₂, LiMnO₂, LiMn₂O₄, or LiNiₓCo₁₋ₓO₂ can be used. The electrolyte can be carbon materials such as carbon black or graphite. The binder can be teflon (PTFE), polyvinylidene fluoride (PVDF), polyethylene (PE) or polyvinyl alcohol (PVA). The current collector can be aluminum foil, stainless steel foil, or nickel foil. Its shape or form can be mesh type, box shape or foil-type.

For the fabrication of the lithium ion rechargeable battery, said electrolyte solution is an anhydrous electrolyte. For the electrolyte material, electrolyte salts that are customarily used in anhydrous electrolyte solution can be used. Examples are: lithium salts such as LiPF₆, LiBF₄, LiAsF₆, LiClO₄, LiSbF₆, LiCl, LiBr, or, LiCF₂SO₃. From the standpoint of the stability of oxidation, it is better to choose LiClO₄, LiPF₆, LiBF₄, and, LiAsF₆. The solvents are organic solvents and can be one or more of the following: ethylene carbonate, propylene carbonate, ethyl methyl carbonate, methyl propyl carbonate, dimethyl carbonate, diethyl carbonate, 1,1 or 1,2 dimethyl oxyl ethane, 1,2 diethyl oxyl ethane, tetrahydrofuran, dimethyl tetrahydrofuran, methyl phenoxide, ether, N-methyl pyrrolidone, dimethyl formamide, acetonitrile, propionitrile, cyanogen chloride, or ethyl acetate.

Said separator can be on woven fabrics or microporous membrane made with synthetic resin. It is preferable to use microporous membrane made with synthetic resin. The best results are obtained with microporous membranes made with polyolefine such as a microporous membrane of PE, PP (polypropylene) or PE/PP.

The lithium ion rechargeable battery made with above-described negative and positive electrodes, electrolyte solution and separator has high discharge capacity, long cycle life with excellent high current and safety characteristics. Also, the cost of production is low, the technology simple, and easy to industrialize.

The embodiments discussed below provide further details about this invention.

### Embodiment 1

The following steps comprise the method for the fabrication of Embodiment 1.

Dissolve 5g of thermoset phenol formaldehyde resin in anhydrous ethanol to form 50ml of a 10% polymer solution.

Prepare 200ml of a 5% polymer surface modifier by weighing and dissolving 10g of coal pitch in tetrahydrofuran.

Use 100g natural graphite granules and 50ml of the polymer solution. Using a homemade sprayer head, spray the polymer solution uniformly on the graphite that is fluidized and rolling in high speed to coat the graphite granules. Heat to dry.

Immerse the coated graphite in the polymer surface modifier. Stir adequately, then filter to obtain coated graphite and heat dry. Sift with 300 mesh.

Put the sifted graphite into sealed tubular high temperature furnace. Pass highly pure nitrogen at 10 litre/min of flow volume and increase the temperature at 15°/min to 400°C. Hold the temperature for 1 hour. Then raise the temperature at 10°C/min to 1000°C and hold the temperature for 3 hours before naturally lowering to room temperature to obtain the graphite granules of graphite A with a "shell-core" structure. The weight of the carbon layer coating is 5%. The average granule diameter represented by D₅₀ is 17.2µm. The crystalline interlayer spacing, d₀₀₂, is between 0.336nm and 0.337nm, and the specific surface area is between 1.0 m2/g and 3.0m2/g.

Mix the above described improved graphite granules of graphite A and manmade graphite granules of graphite B at the ratio 50:50 to make the active material for the negative electrode. The average granule diameter of the graphite granules of graphite B, D₅₀, is 16.8µm, the crystallite interlayer spacing, d₀₀₂, is between 0.338nm and 0.339nm. Using PTFE as the binder (4%(w/w)), de-ionized water as the solvent, add a small quantity of dispersant and stir at a controlled speed of 300rpm to 6000 rpm for 0.2 hours to 10 hours. Mix evenly, coat, heat dry, and compress to fabricate the negative electrode of the battery on copper foil.

The fabrication of the lithium ion rechargeable battery uses the above described negative electrode, LiCoO₂ as the active material of the positive electrode, LiPF6 as the electrolyte, a mixture of the following organic solvents: ethylene carbonate, ethyl methyl carbonate and diethyl carbonate as the solvent. The concentration is 1 mole/liter, the separator is a kind of composite separator made of PE and PP. In this embodiment, the weight of the active ingredient in the negative electrode is 1.80g.

### Embodiment 2

The weight ratio of graphite A and graphite B in this embodiment is 40:60. Other than this, all other processes and specifications remain the same as Embodiment 1.

### Embodiment 3

The weight ratio of graphite A and graphite B in this embodiment is 33:67. Other than this, all other processes and specifications remain the same as Embodiment 1.

### Embodiment 4

The weight ratio of graphite A and graphite B in this embodiment is 25:75. Other than this, all other processes and specifications remain the same as Embodiment 1.

### Embodiment 5

The weight ratio of graphite A and graphite B in this embodiment is 60:40. Other than this, all other processes and specifications remain the same as Embodiment 1.

### Embodiment 6

The weight ratio of graphite A and graphite B in this embodiment is 70:30. Other than this, all other processes and specifications remain the same as Embodiment 1.

### Embodiment 7

The weight ratio of graphite A and graphite B in this embodiment is 80:20. Other than this, all other processes and specifications remain the same as Embodiment 1.

In order to test the properties of batteries made from Embodiments 1 though 7, the following comparison examples are also fabricated and the battery characteristics of the above-stated embodiments and comparison examples tested and compared.

### Comparison Example 1

The improved graphite granules of graphite A are used as the only active material for the negative electrode to make the battery. Other than this, all other processes and specifications remain the same as Embodiment 1.

### Comparison Example 2

Directly use man-made graphite granules as the graphite granules of graphite B as the only active material for the negative electrode to make the battery. Other than this, all other processes and specifications remain the same as Embodiment 1.

### Comparison Example 3

Directly use natural graphite granules without any coating treatment as graphite A and man-made graphite granules as graphite B. Use the 50:50 ratio to mix graphite A and graphite B. Other than this, all other processes remain the same as Embodiment 1.

The characteristics of the active material for the negative electrodes and the batteries for the Embodiment 1 though 7 and Comparison Examples 1 through 2 are tested or measured as follows:
The specific surface area of the active material for the negative electrode is obtained using single-point BET method.

The following characteristics of the batteries made from above said embodiments and comparison examples are:
Initial charging specific capacity is the charging capacity using 0.1C of electricity to initially charge to 4.2V/weight of the active material for the negative electrode;
Initial discharging specific capacity is the discharging capacity using 0.1C of electricity to discharge from 4.2V to 3.0V/weight of the active material for the negative electrode.
Initial charge/discharge efficiency = (Initial discharging specific capacity/Initial charging specific capacity) X 100%.

One cycle means the charging to 4.2volts with 1C of electricity and followed by the discharge to 3.0 volts with 1C of electricity. After repeated cycles, a particular cycle's capacity is the discharge capacity of that cycle.

For high current characteristics, C_{3C}/C_{0.5C} is the ratio of discharging capacity using 3C of current to discharge from 4.2V to 3.0V and from 0.5C of current from 4.2V to 3.0 V.

For high current characteristics, C_{2C}/C_{0.5C} is the ratio of discharging capacity using 2C of current to discharge from 4.2V to 3.0V and from 0.5C of current from 4.2v to 3.0 v.

Overcharging characteristics is tested in the following manner. At 4.8volts constant voltage, charge the battery with 3A of high current and observe for 24 hours. If the battery does not explode, then this indicates that the charging characteristics are good and the battery passes this test. If not, then the characteristics are poor and the battery fails this test.

The testing results are shown in the following table:

| Embodiment/Comparison Example | A:B | Specific surface area /m²/g | Initial charging specific volume mAh/g | Initial Discharging Specific Capacity mAh/g | Initial charge/Discharge efficiency % | 100 cycle capacity retention rate % | High Current Characteristics | | Over-charging characteristics |
|---|---|---|---|---|---|---|---|---|---|
| | | | | | | | C_{3C}/C_{0.5C} | C_{2C}/C_{0.5C} | |
| Embodiment1 | 50:50 | 1.76 | 384 | 357 | 93.0 | 94.6 | 82.2 | 94.5 | Pass |
| Embodiment2 | 40:60 | 2.03 | 385 | 350 | 90.9 | 93.9 | 78.9 | 92.2 | Pass |
| Embodiment3 | 33:67 | 2.94 | 383 | 338 | 88.3 | 95.0 | 76.7 | 91.0 | Pass |
| Embodiment4 | 25:75 | 3.85 | 381 | 334 | 88.0 | 95.7 | 76.3 | 91.9 | Pass |
| Embodiment5 | 60:40 | 1.89 | 386 | 356 | 92.2 | 93.8 | 83.3 | 94.8 | Pass |
| Embodiment6 | 70:30 | 1.50 | 390 | 359 | 92.1 | 93.5 | 83.6 | 95.1 | Pass |
| Embodiment7 | 80:20 | 1.26 | 387 | 361 | 93.3 | 93.1 | 85.7 | 95.7 | Pass |
| Comparison Example 1 | 100:0 | 0.98 | 392 | 367 | 93.6 | 89.4 | 78.3 | 93.5 | Fail |
| Comparison Example2 | 0:100 | 4.13 | 375 | 318 | 84.8 | 95.6 | 69.5 | 90.1 | Pass |
| Comparison Example3 | 50:50 | 5.13 | 390 | 334 | 85.6 | 89.9 | 47.3 | 76.5 | Fail |

The above table shows that lithium ion rechargeable batteries where the active material for the negative electrode is made with a mixture of graphite A and graphite B have excellent overall properties. Their initial charge/discharge efficiency can reach 88% to 94%. They have longer cycle life; on the average, 93% to 95% of the capacity is retained after 100 cycles. They also have excellent high current characteristics; the ratio of discharge capacity with 3C of electricity and discharge capacity with 0.5C of electricity is between 75.3% and 86%. They also have stable and reliable safety characteristics.

## Claims

1. A negative electrode of a rechargeable battery, comprising:
a graphite A comprising of a plurality of graphite granules, said graphite granules having an average granule diameter between 10 and 40µm, and a crystallite interlayer spacing for said granules, d₀₀₂, of between 0.335 nm and 0.342nm, wherein the graphite granules in the graphite A have a "core-shell" structure having a graphite granule as the core and a carbon layer coating on the surface of said graphite granule as the shell; and
a graphite B, different from graphite A, comprising of a plurality of graphite granules with an average granule diameter between 5µm and 30µm and a crystallite interlayer spacing, d₀₀₂, between 0.336 nm and 0.360 nm.

2. The negative electrode of Claim 1 wherein the weight ratio of said graphite A to said graphite B is between 25:75 and 80:20.

3. The negative electrode of Claim 1 wherein said graphite B has more than 30% of its graphite granules having their granule diameters smaller than the average granule diameter of the graphite granules of said graphite A.

4. The negative electrode of Claim 1 wherein the crystallite interlayer spacing, d₀₀₂, of the graphite granules of said graphite A is smaller than the crystallite interlayer spacing, d₀₀₂, of the graphite granules of said graphite B.

5. The negative electrode of Claim 1 wherein the specific surface area of the graphite granules of said graphite A is between 0.96m²/g. and 5.73m²/g.

6. The negative electrode of Claim 4 wherein said graphite B has more than 30% of its graphite granules having their granule diameters smaller than the average granule diameter of the graphite granules of said graphite.

7. The negative electrode of Claim 6 wherein the weight ratio of said graphite A to said graphite B is between 25:75 and 80:20.

8. The negative electrode of Claim 5 wherein the weight ratio of said graphite A to said graphite B is between 25:75 and 80:20.

9. The negative electrode of Claim 6 wherein said the graphite granules in said graphite A has a "core-shell" structure having a graphite granule as the core and a carbon layer coating on the surface of said graphite granule as the shell and where the specific surface area of the graphite granules of said graphite A is between 0.96m²/g. and 5.73m²/g.

10. A method for making negative electrode of a rechargeable battery, comprising:
providing a graphite A comprising of a plurality of graphite granules, said graphite granules having an average granule diameter between 10 and 40µm, and a crystallite interlayer spacing for said granules, d₀₀₂, of between 0.335 nm and 0.342nm; and the graphite granules in said graphite A has a "core-shell" structure having a graphite granule as the core and a carbon layer coating on the surface of said graphite granule as the shell and where the specific surface area of the graphite granules of said graphite A is between 0.96 m²/g. and 5.73m²/g;
providing a graphite B comprising of a plurality of graphite granules with an average granule diameter between 5µm and 30µm and a crystallite interlayer spacing, d₀₀₂, between 0.336 nm and 0.360 nm;
wherein the weight ratio of said graphite A to said graphite B is between 25:75 and 80:20; said graphite B has more than 30% of its graphite granules having their granule diameters smaller than the average granule diameter of the graphite granules of said graphite A; the crystallite interlayer spacing, d₀₀₂, of the graphite granules of said graphite A is smaller than the crystallite interlayer spacing, d₀₀₂, of the graphite granules of said graphite B; and forming the electrode from graphite A and graphite B.

11. The method of Claim 10 comprising the steps of:
mixing said graphite A and graphite B;
adding binder, dispersant, and solvent to said mixture of said graphite A and graphite B to form a coating mixture; and
stirring to mix said coating mixture at 300 rpm to 600 rpm for 0.2 hours to 10 hours;
coating by smearing said coating mixture on a foil,
drying said coating mixture with heat, and
compressing said dried coating mixture to form said negative electrode.

## Patentansprüche

1. Negative Elektrode einer wiederaufladbaren Batterie, Folgendes aufweisend:
ein Graphit A, das aus einer Vielzahl von Graphitkörnchen besteht, wobei die Graphitkörnchen einen mittleren Körnchendurchmesser von 10 bis 40 µm und einen Kristallit-Zwischenschichtabstand bei den Körnchen, d₀₀₂, von 0,335 nm bis 0,342 nm haben, wobei die Graphitkörnchen im Graphit A eine "Kern-Schale"-Struktur mit einem Graphitkörnchen als Kern und einer Kohlenstoffbeschichtung auf der Oberfläche des Graphitkörnchens als Schale haben; und
ein Graphit B, das sich vom Graphit A unterscheidet, und aus einer Vielzahl von Graphitkörnchen mit einem mittleren Körnchendurchmesser von 5 µm bis 30 µm und einem Kristallit-Zwischenschichtabstand, d₀₀₂, von 0,336 nm bis 0,360 nm besteht.

2. Negative Elektrode nach Anspruch 1, wobei das Gewichtsverhältnis des Graphits A zum Graphit B zwischen 25:75 und 80:20 liegt.

3. Negative Elektrode nach Anspruch 1, wobei mehr als 30% der Graphitkörnchen des Graphits B Körnchendurchmesser haben, die kleiner sind als der mittlere Körnchendurchmesser der Graphitkörnchen des Graphits A.

4. Negative Elektrode nach Anspruch 1, wobei der Kristallit-Zwischenschichtabstand, d₀₀₂, der Graphitkörnchen des Graphits A kleiner ist als der Kristallit-Zwischenschichtabstand, d₀₀₂, der Graphitkörnchen des Graphits B.

5. Negative Elektrode nach Anspruch 1, wobei die spezifische Oberfläche der Graphitkörnchen des Graphits A zwischen 0,96 m²/g und 5,73 m²/g beträgt.

6. Negative Elektrode nach Anspruch 4, wobei mehr als 30% der Graphitkörnchen des Graphits B Körnchendurchmesser haben, die kleiner sind als der mittlere Körnchendurchmesser der Graphitkörnchen des Graphits A.

7. Negative Elektrode nach Anspruch 6, wobei das Gewichtsverhältnis des Graphits A zum Graphit B zwischen 25:75 und 80:20 liegt.

8. Negative Elektrode nach Anspruch 5, wobei das Gewichtsverhältnis des Graphits A zum Graphit B zwischen 25:75 und 80:20 liegt.

9. Negative Elektrode nach Anspruch 6, wobei die Graphitkörnchen im Graphit A eine "Kern-Schale"-Struktur mit einem Graphitkörnchen als Kern und einer Kohlenstoffbeschichtung auf der Oberfläche des Graphitkörnchens als Schale haben, und wobei die spezifische Oberfläche der Graphitkörnchen des Graphits A zwischen 0,96 m²/g und 5,73 m²/g beträgt.

10. Verfahren zum Herstellen einer negativen Elektrode einer wiederaufladbaren Batterie, Folgendes umfassend:
Bereitstellen eines Graphits A, das aus einer Vielzahl von Graphitkörnchen besteht, wobei die Graphitkörnchen einen mittleren Körnchendurchmesser von 10 bis 40 µm und einen Kristallit-Zwischenschichtabstand bei den Körnchen, d₀₀₂, von 0,335 nm bis 0,342 nm haben; und wobei die Graphitkörnchen im Graphit A eine "Kern-Schale"-Struktur mit einem Graphitkörnchen als Kern und einer Kohlenstoffbeschichtung auf der Oberfläche des Graphitkörnchens als Schale haben, und wobei die spezifische Oberfläche der Graphitkörnchen des Graphits A zwischen 0,96 m²/g und 5,73 m²/g beträgt;
Bereitstellen eines Graphits B, das aus einer Vielzahl von Graphitkörnchen mit einem mittleren Körnchendurchmesser von 5 µm bis 30 µm und einem Kristallit-Zwischenschichtabstand, d₀₀₂, von 0,336 nm bis 0,360 nm besteht;
wobei das Gewichtsverhältnis des Graphits A zum Graphit B zwischen 25:75 und 80:20 liegt; wobei mehr als 30% der Graphitkörnchen des Graphits B Körnchendurchmesser haben, die kleiner sind als der mittlere Körnchendurchmesser der Graphitkörnchen des Graphits A; wobei der Kristallit-Zwischenschichtabstand, d₀₀₂, der Graphitkörnchen des Graphits A kleiner ist als der Kristallit-Zwischenschichtabstand, d₀₀₂, der Graphitkörnchen des Graphits B; und Ausbilden der Elektrode aus dem Graphit A und Graphit B.

11. Verfahren nach Anspruch 10, das die folgenden Schritte umfasst:
Mischen des Graphits A und Graphits B;
Zusetzen eines Bindemittels, Dispergiermittels und Lösungsmittels zum Gemisch aus dem Graphit A und dem Graphit B, um ein Beschichtungsgemisch zu bilden; und
Rühren bei 300 U/min bis 600 U/min für 0,2 bis 10 Stunden, um das Beschichtungsgemisch zu vermengen;
Beschichten durch Aufstreichen des Beschichtungsgemischs auf eine Folie,
Trocknen des Beschichtungsgemischs mit Wärme, und
Pressen des getrockneten Beschichtungsgemischs, um die negative Elektrode auszubilden.

## Revendications

1. Electrode négative d'une batterie rechargeable, comprenant :
un graphite A comprenant une pluralité de granules de graphite, lesdits granules de graphite ayant un diamètre de granule moyen compris entre 10 et 40 µm, et un espacement intercouche de cristallite pour lesdits granules, d₀₀₂, compris entre 0,335 nm et 0,342 nm, où les granules de graphite dans le graphite A ont une structure du type « noyau-enveloppe » comportant un granule de graphite comme noyau et un revêtement par couche de carbone sur la surface dudit granule de graphite comme enveloppe ; et
un graphite B, différent du graphite A, comprenant une pluralité de granules de graphite dont le diamètre de granule moyen est compris entre 5 µm et 30 µm et un espacement intercouche de cristallite, d₀₀₂, compris entre 0,336 nm et 0,360 nm.

2. L'électrode négative de la revendication 1, où le rapport pondéral dudit graphite A par rapport audit graphite B est compris entre 25:75 et 80:20.

3. L'électrode négative de la revendication 1, où ledit graphite B a plus de 30 % de ses granules de graphite dont les diamètres de granule sont plus petits que le diamètre de granule moyen des granules de graphite dudit graphite A.

4. L'électrode négative de la revendication 1, où l'espacement intercouche de cristallite, d₀₀₂, des granules de graphite dudit graphite A est plus petit que l'espacement intercouche de cristallite, d₀₀₂, des granules de graphite dudit graphite B.

5. L'électrode négative de la revendication 1, où la surface spécifique des granules de graphite dudit graphite A est comprise entre 0,96 m²/g et 5,73 m² /g.

6. L'électrode négative de la revendication 4, où ledit graphite B a plus de 30 % de ses granules de graphite dont les diamètres de granule sont plus petits que le diamètre de granule moyen des granules de graphite dudit graphite A.

7. L'électrode négative de la revendication 6, où le rapport pondéral dudit graphite A par rapport audit graphite B est compris entre 25:75 et 80:20.

8. L'électrode négative de la revendication 5, où le rapport pondéral dudit graphite A par rapport audit graphite B est compris entre 25:75 et 80:20.

9. L'électrode négative de la revendication 6, où lesdits granules de graphite dans ledit graphite A ont une structure du type « noyau-enveloppe » comportant un granule de graphite comme noyau et un revêtement par couche de carbone sur la surface dudit granule de graphite comme enveloppe et où la surface spécifique des granules de graphite dudit graphite A est comprise entre 0,96 m²/g et 5,73 m²/g.

10. Procédé de fabrication d'une électrode négative d'une batterie rechargeable, comportant :
la fourniture d'un graphite A comprenant une pluralité de granules de graphite, lesdits granules de graphite ayant un diamètre de granule moyen compris entre 10 et 40 µm, et un espacement intercouche de cristallite pour lesdits granules, d₀₀₂, compris entre 0,335 nm et 0,342 nm ; et les granules de graphite dans ledit graphite A ont une structure du type « noyau-enveloppe » comportant un granule de graphite comme noyau et un revêtement par couche de carbone sur la surface dudit granule de graphite comme enveloppe et où la surface spécifique des granules de graphite dudit graphite A est comprise entre 0,96 m²/g et 5,73 m²/g ;
la fourniture d'un graphite B comprenant une pluralité de granules de graphite dont le diamètre de granule moyen est compris entre 5 µm et 30 µm et un espacement intercouche de cristallite, d₀₀₂, compris entre 0,336 nm et 0,360 nm ;
où le rapport pondéral dudit graphite A par rapport audit graphite B est compris entre 25:75 et 80:20 ; ledit graphite B a plus de 30 % de ses granules de graphite dont les diamètres de granule sont plus petits que le diamètre de granule moyen des granules de graphite dudit graphite A ; l'espacement intercouche de cristallite, d₀₀₂, des granules de graphite dudit graphite A est plus petit que l'espacement intercouche de cristallite, d₀₀₂, des granules de graphite dudit graphite B ; et la formation de l'électrode à partir du graphite A et du graphite B.

11. Le procédé de la revendication 10, comportant les étapes consistant à :
mélanger lesdits graphite A et graphite B ;
ajouter un liant, un dispersant et un solvant audit mélange desdits graphite A et graphite B pour former un mélange de revêtement ; et
brasser pour mélanger ledit mélange de revêtement à une vitesse comprise entre 300 t/mn et 600 t/mn pendant 0,2 heure à 10 heures ;
revêtir en enduisant ledit mélange de revêtement sur une feuille ;
sécher ledit mélange de revêtement avec de la chaleur ; et
comprimer ledit mélange de revêtement sec pour former ladite électrode négative.
